# EUROPEAN PATENT SPECIFICATION

(11) **EP 2 759 111 B1**
(45) Date of publication and mention of the grant of the patent: **18.11.2015**
(21) Application number: 12762499.7
(22) Date of filing: 11.09.2012
(51) Int. Cl.: H04L 29/06

(54) **STATISTICAL MULTIPLEXING OF STREAMING MEDIA**
STATISTISCHE MULTIPLEXIERUNG VON STREAMING-MEDIEN
MULTIPLEXAGE STATISTIQUE DE CONTENU MULTIMÉDIA DIFFUSÉ EN CONTINU

(30) Priority: 20.09.2011 US 201113237452
(43) Date of publication of application: 30.07.2014
(73) Proprietor: Motorola Mobility LLC, Libertyville, IL 60048 (US)
(72) Inventor: MAGEE, Mark R., Campbell, California 95008 (US)
(74) Representative: Openshaw, Paul Malcolm
(86) International application number: PCT/US2012/054635
(87) International publication number: WO 2013/043411

(56) References cited:
- US-A1- 2008 259 921
- US-B1- 6 731 685

## Description

### Background of the Invention

With recent advances in digital data transmission techniques and digital video compression such as used in the MPEG standards (e.g., MPEG-2, MPEG-4), it is possible to deliver several digitally compressed video programs in the same bandwidth that is otherwise occupied by a single analog television (TV) channel. These capabilities provide opportunities for programming service providers (e.g., broadcasters such as CNN, ABC), network operators (e.g., cable and satellite network owners), and end users.

In a multi-program transmission environment, several programs (e.g., channels) are coded, multiplexed and transmitted over a single communication channel. Since these programs share a limited channel capacity, the aggregate bit rate of the programs must be no greater than the communication channel rate. In order to optimize the quality and efficiency of the program transmission process, the bit rate of the program or video streams can be varied as needed to manage the utilization of network bandwidth.

One video transmission technique that may be used to manage bandwidth is statistical multiplexing, which combines several programs each comprising a compressed video bit stream into a single multiplexed bit stream, e.g., for transmission of a plurality of programs on a single frequency. In this manner a service provider may provide more programs to a subscriber base using the same network infrastructure, e.g. providing four programs in the same network infrastructure that would have previously provided a single program. For a given level of video quality, the bit rate of a given compressed stream generally varies with time based on the complexity of the corresponding video signals. A statistical multiplexer attempts to estimate the complexity of the various video frame sequences of a video signal and allocates channel bits among the corresponding compressed video bit streams. In some cases the bits are allocated so as to provide a desired (e.g., approximately constant) level of video quality across all of the multiplexed streams. For example, a given video frame sequence with a relatively large amount of spatial activity or motion may be more complex than other sequences and therefore allocated more bits than the other sequences. On the subscriber side, a network element, such as set top box, pulls the desired program out of the multiplex stream by use of a tuner to tune to the multiplex frequency and a decoder to decode the desired program such as by using its associated program ID (PID).

One problem with statistical multiplexing is that it requires the provision of specialized equipment within the network, which is cost effective only for broadcast programs which serve a large number of clients in a simultaneous manner of program distribution. That is, given a large number of customers, the cost per customer may be extremely small, even for expensive encoders and rate shapers. However, for applications such as video-on-demand (VOD) and network digital video recording (NDVR), which involves a single customer, the bandwidth management costs associated with statistical multiplexing may be unacceptably high.

Another technique that may be used to manage bandwidth involves adaptively streaming data as streaming media. Streaming media differs from ordinary media in the sense that streaming media may be played out as soon as it is received rather than waiting for the entire file to be transferred over the network. One advantage associated with streaming media is that it allows the user to begin viewing the content immediately or on a real-time basis with rather short delay. In contrast, simply downloading a media file to a customer, which is a very effective technique to manage bandwidth because it allows for very wide swings in bit rate, does not allow the user to begin viewing the content on a real-time basis. The downloaded media must also be stored prior to playback, requiring significant and often expensive storage capabilities on the subscriber device. This delay and associated additional expense may be unacceptable to customers, thereby making streaming media more attractive.

In adaptive streaming, the encoded bit rate of a media data stream is dynamically adjusted depending on specific network conditions. To achieve this, the streaming server continuously estimates the current state of the network and adjusts the transmitted bit rate upward or downward depending on the available bandwidth associated with that particular streaming communication frequency data link.

One problem with media streaming architectures is the tight coupling that is required between the streaming server and client. The communication between the client and server that streaming media requires creates additional server overhead, because the server tracks the current state of each client. Significantly, this limits the scalability of the server as the number of media data streams being streamed increases. In addition, the client cannot quickly react to changing conditions, such as increased packet loss, reduced bandwidth, user requests for different content or to modify the existing content (e.g., speed up or rewind), and so forth, without first communicating with the server and waiting for the server to adapt and respond. Often, when a client reports a lower available bandwidth, the server does not adapt quickly enough causing breaks in the media to be noticed by the user on the client as packets that exceed the available bandwidth are not received and new lower bit rate packets are not sent from the server in time. To avoid these problems, clients often buffer data, but buffering introduces latency, which for live events may be unacceptable.

Accordingly, neither statistical multiplexing nor adaptive streaming are fully satisfactory methods of managing bandwidth in a network.

US 2008/259921 is related to media delivery using multiple IP multicast streams. US 6731685 discloses how to determine required bit rates in IPTV streaming systems.

### Summary

In accordance with one aspect of the invention, a method is provided for delivering streaming media content to client devices over a network. The method includes receiving, for each of a plurality of services, a plurality of media streams encoded at different bit rates. The plurality of media streams for each service contain common content to be received by one or more of the client devices. Each of the media streams includes a plurality of segments having a prescribed duration. For each service a need parameter is obtained for each segment contained within the media streams for that service. Each need parameter reflects a bit rate needed to transmit over the network the respective segment of the media streams for that service at a given quality level. One of the media streams for each service is selected by allocating bandwidth to the media streams based at least in part on the need parameters for each corresponding segment of the media streams. The selected media streams are multiplexed to thereby form a multiplexed stream. The multiplexed stream is adaptively streamed over the network to the client devices.

In accordance with another aspect of the invention, a statistical multiplexing streaming server is provided. The statistical multiplexing streaming server includes a statistical multiplexer for receiving, for each of a plurality of services, a plurality of media streams encoded at different bit rates. The plurality of media streams for each service contain common content to be received by one or more client devices. Each of the media streams has associated therewith one or more need parameters reflecting a bit rate needed to transmit the respective media stream over a network at a given quality level. The statistical multiplexer includes (i) a rate control processor for selecting one of the plurality of media streams for each service by allocating bandwidth to the media streams based on the need parameters associated therewith, and (ii) a multiplexer for multiplexing each of the selected media streams to form a multiplexed media stream. The statistical multiplexing streaming server also includes an adaptive streaming server for receiving the multiplexed media stream from the statistical multiplexer and adaptively streaming the multiplexed media stream over a network to the client devices.

In accordance with another aspect of the invention a headend for delivering video content is provided. Further aspects of the invention are defined in the dependent claims.

### Brief Description of the Drawings

FIG. 1 shows one example of an architecture that can be used to deliver video and other content and services to users associated with a variety of different client devices.
FIG. 2 shows a logical block diagram of the statistical multiplexing streaming server of FIG. 1.
FIG. 3 shows one example of a statistical multiplexer that may be employed as the statistical multiplexer in FIG. 2.
FIG. 4 shows one example of a streaming server that may be employed as the streaming server shown in FIG. 4.
FIG. 5 is a block diagram of one illustrative implementation of the stream server modules 103 shown in FIG. 4.
FIG. 6 is a flowchart showing one example of a method for delivering streaming media content to client devices over a network.

### Detailed Description

Both statistical multiplexing and adaptive streaming can be used together to manage bandwidth in a manner that can overcome the aforementioned problems. As detailed below, for each service (e.g., program, channel) to be delivered to client devices a multi-bit rate video encoder creates two or more media streams which have the same content, but which are encoded at different bit rates. The video encoder appends to or otherwise associates with each media stream a need parameter. The need parameter gives an indication of the bit rate required to transmit a short segment (e.g., 1-5 seconds) of the media stream with which it is associated. The required bit rate may be determined, for example, by a desired or otherwise specified video quality level. A statistical multiplexer aggregates the need parameters on a segment by segment basis for all the services and allocates bandwidth to each service, again on a segment by segment basis, based on its need parameter relative to the aggregate need parameter for all the services.

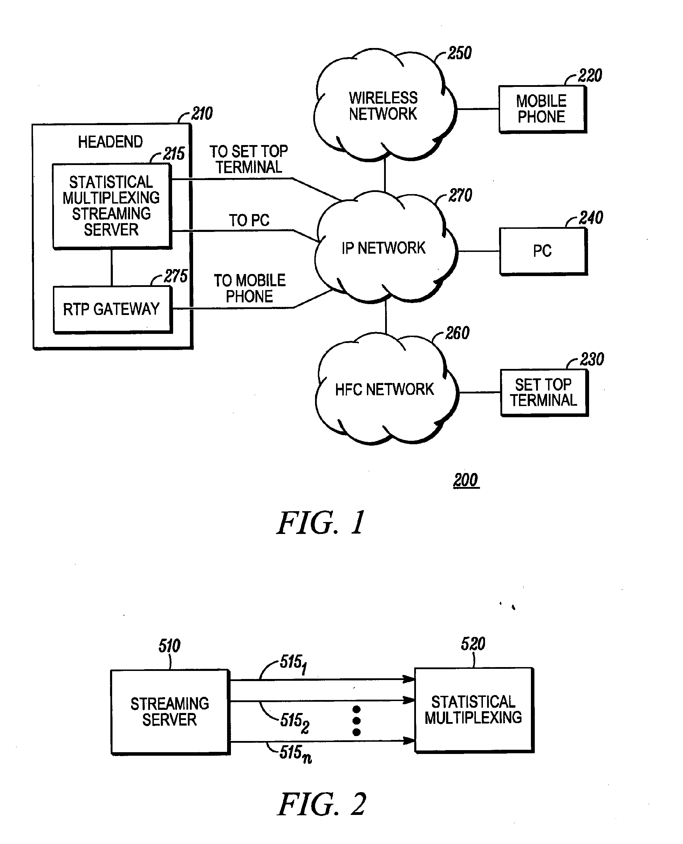

FIG. 1 shows one example of an architecture 200 that can be used to deliver video and other content and services to users associated with a variety of different client devices, which may include, without limitation, PCs, PDAs, portable computers, media centers, portable media players, mobile telephones and set-top boxes. In this illustrative example, three client devices are shown, a mobile phone 220, a set top terminal 230 and a personal computer (PC) 240.

A headend 210 is in communication with each of the client devices 220, 230 and 240 via IP network 270. Mobile phone 220 communicates with headend 210 over the IP network 270 and a wireless network such as a GSM or a UMTS network, for example. Set top terminal 230 communicates with headend 210 over the IP network 270 and a hybrid fiber/coax (HFC) network 260 and PC 240 communicates with the headend 210 over the IP network 270, typically via an Internet service provider (not shown). Of course, the architecture depicted in FIG. 1 is presented for illustrative purposes only. More generally, a wide variety of different client devices may communicate with the headend over other types of networks including, for instance, all optical fiber, all-coaxial, xDSL (e.g., ADSL, ADLS2, ADSL2+, VDSL, and VDSL2) and satellite systems.

The headend 210 is the facility from which a network operator delivers programming content and provides other services to the client devices. The headend 210 includes a multi-bit rate video encoder 218 and a statistical multiplexing streaming server 215. The multi-bit rate video encoder 218 supplies programming content to the statistical multiplexing streaming server 215 at different bit rates. That is, for any given service (e.g., program) multi-bit rate video encoder 218 provides multiple media streams for that service which require different amounts of bandwidth to be transmitted. For instance, multi-bit rate video encoder 218 may provide multiple media streams of a given service at e.g., 2,4, 8 and 15 MbPs, thereby providing two standard definition media streams and two high definition media streams.

It should be noted that in some cases the functionality of some all of the statistical multiplexing streaming server 215 may be performed in one of the networks themselves instead of the headend. For instance, the functionality of the statistical multiplexing streaming server 215 may be transferred to one or more hubs in the HFC network 260.

Statistical multiplexing streaming server 215 receives the multiple media streams for each service from the multi-bit rate video encoder 218. Statistical multiplexing streaming server 215 selects one media stream for each service, which are then multiplexed and streamed to the client devices over the appropriate network. The term "streaming" is used to indicate that the data representing the media content is provided over a network to a client device and that playback of the content can begin prior to the content being delivered in its entirety (e.g., providing the data on an as-needed basis rather than pre-delivering the data in its entirety before playback).

As is well known to those of ordinary skill in the art, the transport of media streams preferably uses a video encoding standard, such as MPEG-2, and a transport standard such as MPEG-2 Transport Stream, MPEG-4, or Real-Time Protocol (RTP), as well as coding standards for audio and ancillary data. Higher end client devices such as set top terminals typically receive content encapsulated in an MPEG-2 Transport Stream whereas lower end client devices such as a PDA receive content encapsulated using a transport protocol such as the real-time protocol (RTP).

Since many higher end devices such as set top terminals are capable of receiving and decoding MPEG-2 Transport Streams, statistical multiplexing streaming server 215 will typically deliver the encoded content in this format. On the other hand, if, for instance, RTP is used as the delivery mechanism, in the example shown in FIG. 1 mobile phone 220 receives the content in accordance with RTP. Accordingly, an RTP gateway 275 is employed between the output of the streaming server 215 and the wireless network 250. The RTP gateway 275 transforms the MPEG-2 transport packet provided by the statistical multiplexing streaming server 215 into the appropriate RTP transport packets. Since the PC 240 and the set top terminal 230 can receive MPEG-2 Transport Streams, no such gateway is necessary between the statistical multiplexing streaming server 215 and these devices. In this example the RTP gateway 275 may be included in the headend 210, although alternatively it may be located elsewhere in the network.

Of course, the media streams may be encoded by the multi-bit rate video encoder 218 in accordance with a variety of media formats and is not limited MPEG-2. For instance, the media streams may be encoded in accordance with other media formats, including but not limited to Hypertext Markup Language (HTML), Virtual Hypertext Markup Language (VHTML), X markup language (XML), H.261, H.263, H.264 or VC1 formats as well as any of the MPEG standards such as MPEG-2 and MPEG-4. A video stream that conforms to the MPEG-2 standard will be used herein for illustrative purposes only and not as a limitation on the invention.

Each media stream delivered by the multi-bit rate video encoder 218 may be logically divided into a series of segments that have a predetermined duration. Each media stream includes a need parameter for each segment, which may be carried in metadata or other syntax formats. The need parameter is one measure that gives information regarding the difficultly involved with compressing the segment with which it is associated, which in turn gives an indication of the bit rate required to transmit that specified segment of the media stream at a given quality level. Since the need parameter inherently depends on the complexity of a given segment, each segment have only one need parameter per service. That is, corresponding segments of the various media streams encoded at different bit rates for a given service will all have the same need parameter.

The need parameters for each segment of the media streams may be calculated in any of a variety of different ways. For instance, in the case of an MPEG-2 digital stream the complexity of a video frame is measured by the product of the quantization level (QL) used to encode that frame and the number of bits used for coding the frame (R). This means the complexity of a frame is not known until it has been encoded. If the video encoder 218 receives content from a content provider which has already been compressed using a suitable encoding technique such as MPEG-2, then the need parameter may specify the actual complexity of each media stream interval. In this case the video encoder 218 may serve as a transcoder which converts a precompressed video bit stream into another bit stream at a new rate. For simplicity, both encoders and transcoders are referred to herein as encoders.

On the other hand, if the content from the content provider is first encoded by the video encoder 218, then the need parameter provided by the video encoder 218 may not specify the actual complexity of a segment because the need parameter may be calculated before the segment has actually been encoded. In this case the need parameter provided by the video encoder 218 may estimate the complexity by using, for example, some pre-encoding statistics about the media stream, such as intra-frame activity, or motion estimation (ME) scores, which can be used as a substitute for the traditional measure of complexity. Examples illustrating how a need parameter can be calculated are shown in U.S. Patent No. 6,731,685.

As previously mentioned, the need parameter may be included as metadata in the encoded media streams provided by the video encoder 218. The manner in which the metadata is carried by the media stream will in part depend on the encoding scheme that is used. For instance, in the case of MPEG-2, the MPEG protocol supports the carriage of metadata that can be used to provide instructions or other information to a downstream device such as a statistical multiplexer. More particularly, MPEG-2 supports the incorporation of private metadata, which in some implementations may be conveniently used to carry the need parameter metadata. Such private metadata may be incorporated into the MPEG-2 encoded video stream as private metadata at the transport stream level, the program elementary stream (PES) level, or the video sequence level (i.e., the level at which images such as I, B and P pictures are defined). The private metadata may be embodied in any appropriate data structure that may in part depend on the level at which the information is embedded. For instance, in one particular implementation the need parameter may be located in the adaptation field of the transport packets and a descriptor that describes the structure of the metadata may be located in the program map table (PMT).

Alternatively, the need parameters may be incorporated into a manifest that is transmitted by the video encoder 218 to the statistical multiplexing streaming server 215 as a separate file, either before or after the media streams are transmitted. For example, one streaming technique that employs such a manifest is specified in the HTTP Line Streaming (HLS) protocol.

FIG. 2 shows a logical block diagram of the statistical multiplexing streaming server of FIG. 1. The statistical multiplexing streaming server 100 includes statistical multiplexer 520 and adaptive streaming server 510.

In the example shown in FIG. 2 the statistical multiplexer 520 receives three services 515, 518 and 522 from the multi-bit rate video encoder 218. Of course, the encoder 218 more generally may send any number of services to statistical multiplexer 520. As mentioned above, the multi-bit rate video encoder 218 provides multiple media streams for each program, each encoded at a different bit rate. In this example the encoder 218 provides media streams 515₁, 515₂, 515₃ for service 515, media streams 518₁, 518₂, 518₃ for service 518 and media streams 522₁, 522₂, 522₃ for service 522. Although three media streams are provided in this example for each service, more generally any suitable number of media streams may be provide which may differ from service to service.

The statistical multiplexer 520 selects one of the media streams for each service 515, 518 and 522 based on the maximum available bandwidth on the network and the need parameter for the corresponding segments of each service. The particular media stream that is selected for each service may differ from segment to segment. In this way more complex segments of a given media stream can be allocated more bits than less complex segments of the media stream without exceeding the total bandwidth that is available. The statistical multiplexer 520 then multiplexes the selected media stream segments and sends them to the adaptive streaming server. In FIG. 2, for instance, for one segment statistical multiplexer 520 multiplexes media streams 515₁, 518₁, 522₃, respectively, and sends the multiplexed stream to the adaptive streaming server 510, which can then stream the multiplexed media streams to the client devices. This process continues for subsequent segments, for which the statistical multiplexer 520 may select a different combination of media streams.

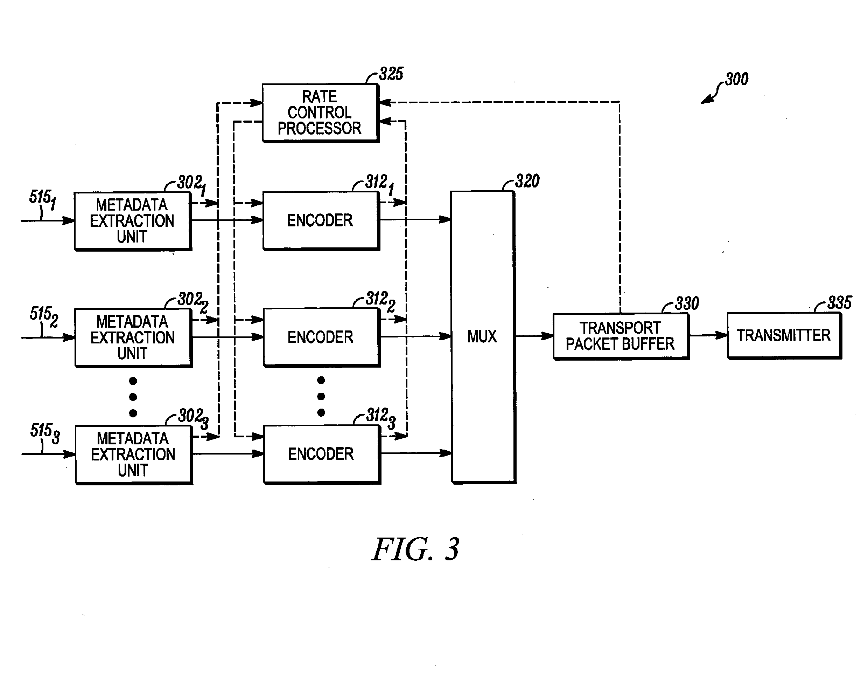

FIG. 3 shows one example of a statistical multiplexer that may be employed as the statistical multiplexer 520 shown in FIG. 2. Of course, other statistical multiplexers may be employed as well. In this example the statistical multiplexer 300 includes metadata extraction units 302₁, 302₂ and 302₃ that receive corresponding media streams 515 (515₁, 515₂ and 515₃), 518 (518₁, 518₂ and 518₃) and 522 (522₁, 522₂ 522₃) from the streaming server. The metadata extraction units 302₁, 302₂, and 302₃ provide the need parameter data to a rate control processor 325. The metadata extraction units 302₁, 302₂ and 302₃ also pass the media streams to first- in first-out (FIFO) buffers 312₁, 312₂ and 312₃, respectively. The FIFO buffers 312₁, 312₂ and 312₃ store the data in the media streams until one of the media streams is selected for each service. The rate control processor 325 selects one of media streams for each service based on the need parameters received from the metadata extraction units 302. This selection may be performed in accordance with a variety of different techniques, a few illustrative examples of which will be discussed below. Once the rate control processor 325 selects the media streams, it directs the FIFO buffers 312 to send the selected media stream to the multiplexer 320, which provides a multiplexed bitstream. The multiplexed bitstream output from the multiplexer 320 is sent to a transport packet buffer 330, and then to streaming server 510 (see FIG. 2) for transmission across a network channel to the appropriate client devices.

As mentioned above, the rate control processor 325 allocates bandwidth (i.e., bit rates) to the services that are to be delivered to client devices by collecting the latest need parameters from a media stream associated with each service. As previously mentioned, the media streams associated with each program or service all have the same need parameters and thus the need parameters only need to be extracted from one media stream for each of the services. In some cases the rate control processor 325 may also has access to minimum and maximum bandwidth limits established by the user for each individual channel and/or the capabilities of the client device. Prior to selecting the appropriate media stream for a given segment of each service, the rate control processor 325 sums up all the need parameters for that segment and assigns a need bit rate to each stream in proportion to the stream's need parameter. A stream having a need parameter that indicates that its stream during that particular interval is more complex than another stream will be allocated more bandwidth and hence assigned a higher bit rate.

If maximum and minimum bandwidth limits are established by each client device (or group of client devices) that is receiving a respective stream, the rate control processor 325 will generally attempt to honor all minimum bandwidth limits first. If the sum total of all minimum bandwidths for a given segment exceeds the total bandwidth available to all the streams, the rate control processor 325 distributes the total bandwidth amongst all the streams in proportion to their minimum bandwidth limits. Otherwise, each service is given its minimum bandwidth for that segment.

The minimum bandwidth assigned to any particular media stream is subtracted from the need bit rate previously calculated for that stream, since this indicates a portion of the need had been satisfied. After allocating the minimum bandwidths, any remaining bandwidth is distributed to all the services in proportion to their remaining needs, with the constraint that no stream can exceed its maximum bandwidth limit.

If there is still available bandwidth remaining for that segment, (which is possible if one or more media streams reach their maximum bandwidth limits), the remaining bandwidth may be distributed to those streams that have not yet reached their maximum bandwidth limit. This distribution may be made according to the ratio of a given stream's need parameter to the sum of the need parameters belonging to those streams that have not reached their maximum bandwidth limit.

Once the rate controller has allocated bandwidth to each service, it selects the media stream for each service having a bit rate that mostly closely conforms to the allocated bandwidth. In particular, the rate controller 325 will generally select a media stream having a bit rate that is closest to, but not greater than, the allocated bandwidth. In this way the maximum available bandwidth will not be exceeded when the selected media streams are multiplexed together. The media streams which are selected for each service may of course vary from segment to segment based on the relative amount of bandwidth they each require. As a consequence, the statistical multiplexer 520 may be regularly changing its selection and therefore switching from one media stream to another media stream for each service.

The media streams that are selected by the rate controller 325 are sent by the FIFO buffers 312₁, 312₂ and 312₃ to the multiplexer 320. The multiplexer 320 multiplexes the selected streams and sends them to the transport buffer 330 for transmission to the adaptive streaming server 510 shown in FIG. 2. Adaptive streaming server 510, in turn, streams the multiplexed media streams to the client devices at a bit rate which may be dynamically adjusted based on the specific network conditions.

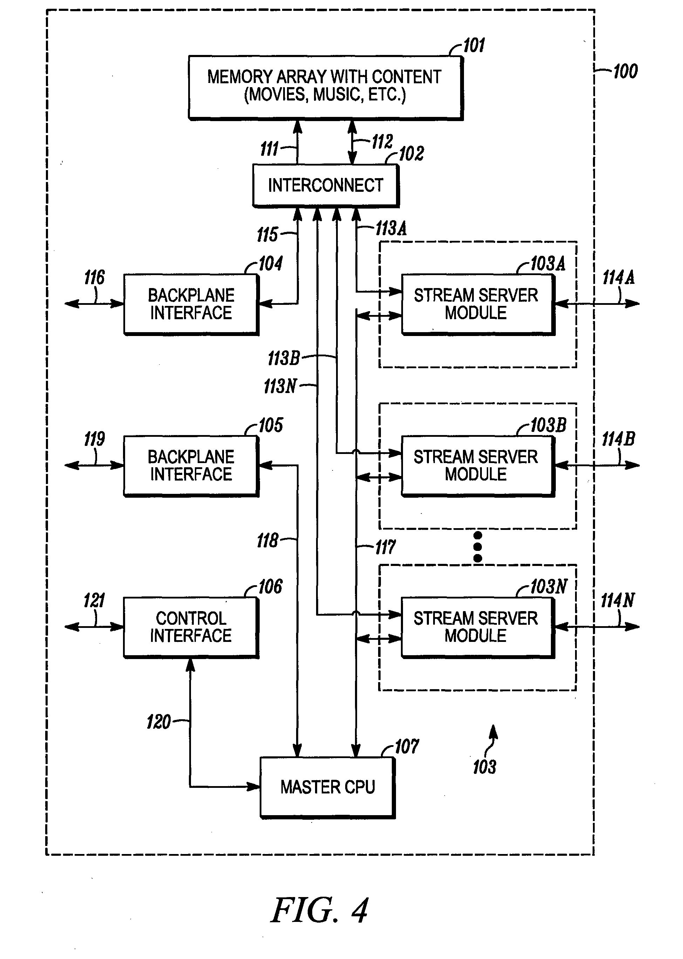

One example of a streaming server that may employ the methods, techniques and systems described herein is shown in FIG. 4. The streaming server 110 shown therein is particularly suitable for streaming on-demand content such as video-on-demand to client devices. While the server 110 will be used for purposes of illustration, those of ordinary skill in the art will recognize that the methods, techniques and systems described herein are also applicable to wide variety of the other streaming servers employing different architectures.

The streaming server 100 includes a memory array 101, an interconnect device 102, and stream server modules 103a through 103n (103). Memory array 101 is used to store the on-demand content and could be many Gigabytes or Terabytes in size. Such memory arrays may be built from conventional memory solid state memory including, but not limited to, dynamic random access memory (DRAM) and synchronous DRAM (SDRAM). The stream server modules 103 retrieve the content from the memory array 101 and generate multiple asynchronous streams of data that can be transmitted to the client devices. The interconnect 102 controls the transfer of data between the memory array 101 and the stream server modules 103. The interconnect 102 also establishes priority among the stream server modules 103, determining the order in which the stream server modules receive data from the memory array 101.

The communication process starts with a stream request being sent from a client device (e.g., client devices 220, 230 and 240 in FIG. 1) over an associated transport network (e.g., networks 250, 260 and 270 in FIG. 1). The command for the request arrives over a signal line 114a-114n (114) to a stream server module 103, where the protocol information is decoded. If the request comes in from stream server module 103a, for example, it travels over a bus 117 to a master CPU 107. For local configuration and status updates, the CPU 107 is also connected to a local control interface 106 over signal line 120, which communicates with the system operator over a line 121. Typically this could be a terminal or local computer using a serial connection or network connection.

Control functions, or non-streaming payloads, are handled by the master CPU 107. For instance, stream control in accordance with the RTSP protocol is performed by CPU 107. Program instructions in the master CPU 107 determine the location of the desired content or program material in memory array 101. The memory array 101 is a large scale memory buffer that can store video, audio and other information. In this manner, the server system 100 can provide a variety of content to multiple customer devices simultaneously. Each client device can receive the same content or different content. The content provided to each client device is transmitted as a unique asynchronous media stream of data that may or may not coincide in time with the unique asynchronous media streams sent to other client devices.

If the requested content is not already resident in the memory array 101, a request to load the program is issued over signal line 118, through a backplane interface 105 and over a signal line 119. An external processor or CPU (not shown) responds to the request by loading the requested program content over a backplane line 116, under the control of backplane interface 104. Backplane interface 104 is connected to the memory array 101 through the interconnect 102. This allows the memory array 101 to be shared by the stream server modules 103, as well as the backplane interface 104. The program content is written from the backplane interface 104, sent over signal line 115, through interconnect 102, over signal line 112, and finally to the memory array 101.

When the first block of program material has been loaded into memory array 101, the streaming output can begin. Streaming output can also be delayed until the entire program has been loaded into memory array 101, or at any point in between. Data playback is controlled by a selected one or more stream server modules 103. If the stream server module 103a is selected, for example, the stream server module 103a sends read requests over signal line 113a, through the interconnect 102, over a signal line 111 to the memory array 101. A block of data is read from the memory array 101, sent over signal line 112, through the interconnect 102, and over signal line 113a to the stream server module 103a. Once the block of data has arrived at the stream server module 103a, the transport protocol stack is generated for this block and the resulting primary media stream is sent to transport network 122a over signal line 114a. The transport network then carries the primary media stream to the client device. This process is repeated for each data block contained in the program source material.

If the requested program content already resides in the memory array 101, the CPU 107 informs the stream server module 103a of the actual location in the memory array. With this information, the stream server module can begin requesting the program stream from memory array 101 immediately.

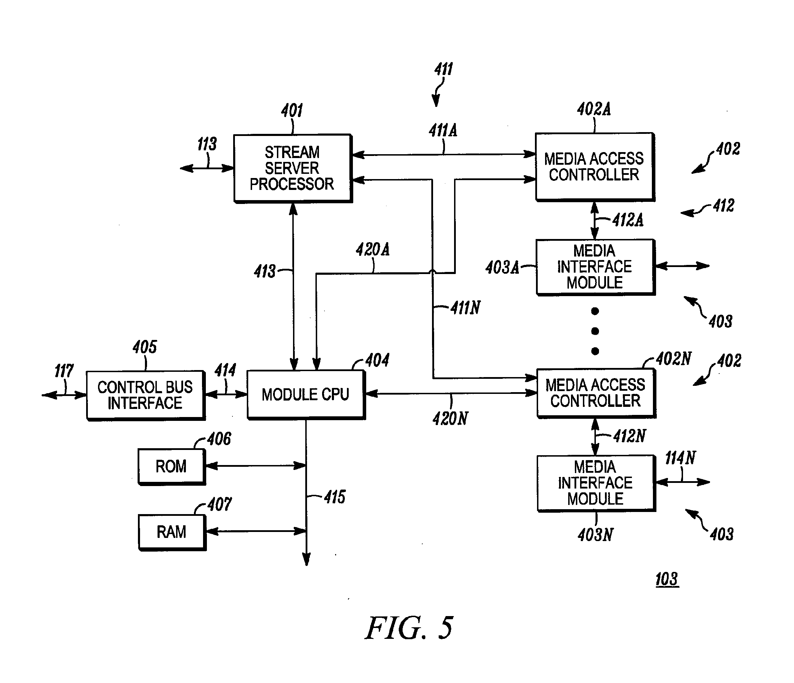

FIG. 5 is a block diagram of one illustrative implementation of the stream server modules 103 shown in FIG. 4. A stream server processor (SSP) 401 serves as the automatic payload requester, as well as the protocol encoder and decoder. The SSP 401 requests and receives data payload over signal line 113. It then encodes and forms network level packets, such as TCP/IP or UDP/IP or the like. The SSP 401 may also calculate the need parameters that will associated with each segment of the media stream that will be subsequently generated. The encoded packets are sent out over signal lines 411a-411n (411) to one or more media access controllers (MACs) 402a-402n (402). The media access controllers 402 generate the primary media stream by encapsulating the encoded packets in data link level frames or datagrams as required by the specific physical network used. In the case of Ethernet, for example, the Media Access Controllers 402 also handle the detection of collisions and the auto-recovery of link-level network errors. The MACs 402 may also incorporate metadata into the media stream such as the need parameters that have been generated by the SSP 401.

The media access controllers 402 are connected utilizing signal lines 412a-412n (412), to media interface modules 403a-403n (403), which are responsible for the physical media of the network connection. This could be a twisted-pair transceiver for Ethernet, Fiber-Optic interface for Ethernet, SONET or many other suitable physical interfaces, which exist now or will be created in the future, such interfaces being appropriate for the physical low-level interface of the desired network. The media interface modules 403 then send the primary media streams over the signal lines 114a-114n (114) to the appropriate client device or devices.

In practice, the stream server processor 401 divides the input and output packets depending on their function. If the packet is an outgoing payload packet, it can be generated directly in the stream server processor (SSP) 401. The SSP 401 then sends the packet to MAC 402a, for example, over signal line 411a. The MAC 402a then uses the media interface module 403a and signal line 412a to send the packet as part of the primary stream to the network over signal line 114a.

Client control requests are received over network line 114a by the media interface module 403a, signal line 412a and MAC 402a. The MAC 402a then sends the request to the SSP 401. The SSP 401 then separates the control packets and forwards them to the module CPU 404 over the signal line 413. The module CPU 404 then utilizes a stored program in ROM/Flash ROM 406, or the like, to process the control packet. For program execution and storing local variables, it is typical to include some working RAM 407. The ROM 406 and RAM 407 are connected to the CPU over local bus 415, which is usually directly connected to the CPU 404.

The module CPU 404 from each stream server module uses signal line 414, control bus interface 405, and bus signal line 117 to forward requests for program content and related system control functions to the master CPU 107 in FIG. 4. By placing a module CPU 404 in each stream server module, the task of session management and session control can be handled close to the network lines 114a-114n. This distributes the CPU load and allows a much greater number of simultaneous stream connections per network interface.

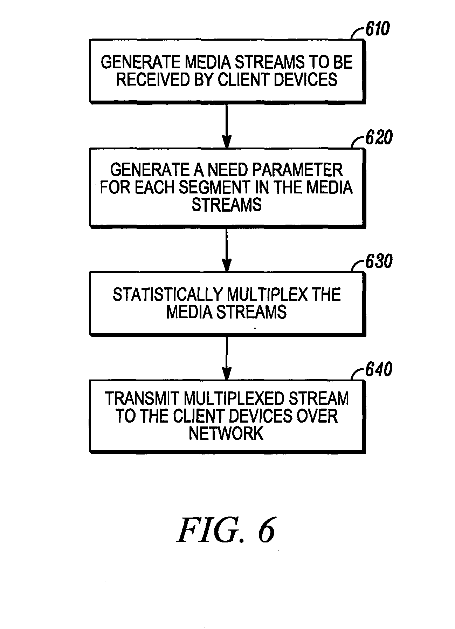

FIG. 6 is a flowchart showing one example of a method for delivering streaming media content to client devices over a network. In this example the method begins at step 610 when a statistical multiplexing streaming server receives, for each of a plurality of services, a plurality of media streams encoded at different bit rates. The plurality of media streams for each service contain the same content. Each of the media streams includes a plurality of segments having a prescribed duration. Next, at step 620, a need parameter is obtained for each segment of the media streams for a service. Each need parameter reflects a bit rate needed to transmit over a network the respective segment of the media streams for that service at a given quality level. One of the media streams is selected for each service at step 630 by allocating bandwidth to the media streams based at least in part on the need parameters for each corresponding segment of the media streams. The selected media streams are multiplexed at step 640 to thereby form a multiplexed stream. The multiplexed stream is adaptively streamed over the network to the client devices at step 650.

As used in this application, the terms "component," "module," "unit," "system," "apparatus," "interface," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable storage media can include but are not limited to magnetic storage devices (e.g., hard disk, floppy disk, magnetic strips ... ), optical disks (e.g., compact disk (CD), digital versatile disk (DVD) ... ), smart cards, and flash memory devices (e.g., card, stick, key drive ... ). Of course, those skilled in the art will recognize many modifications may be made to this configuration without departing from the scope or spirit of the claimed subject matter.

Although described specifically throughout the entirety of the instant disclosure, representative embodiments of the present invention have utility over a wide range of applications, and the above discussion is not intended and should not be construed to be limiting, but is offered as an illustrative discussion of aspects of the invention. What has been described and illustrated herein are embodiments of the invention along with some of their variations. The terms, descriptions and figures used herein are set forth by way of illustration only and are not meant as limitations.

## Claims

1. A method of delivering streaming media content to client devices over a network, comprising:
receiving (610), for each of a plurality of services, a plurality of media streams encoded at different bit rates, the plurality of media streams for each service containing common content to be received by one or more of the client devices, each of said media streams including a plurality of segments having a prescribed duration;
obtaining for each service a need parameter (620) for each segment contained within the media streams for that service, each need parameter reflecting a bit rate needed to transmit over the network the respective segment of the media streams for that service at a given quality level;
selecting one of the plurality of media streams for each service by allocating bandwidth to the media streams based at least in part on the need parameters for each corresponding segment of the media streams;
multiplexing the selected media streams (630) to thereby form a multiplexed stream; and
adaptively streaming the multiplexed stream over the network to the client devices (640).

2. The method of claim 1 wherein the need parameters for each service are incorporated into at least one of the media streams for that service and obtaining the need parameters further comprises extracting from at least one of the media streams for each service the need parameter for each segment contained within the respective media stream.

3. The method of claim 1 wherein the need parameters are based on an actual complexity of the respective segment of the media streams with which it is associated.

4. The method of claim 1 wherein the need parameters are based on an estimate of complexity of the respective segment of the media stream with which it is associated.

5. The method of claim 1 wherein allocating bandwidth to the media streams includes summing the need parameters for corresponding segments of the media streams for each service to obtain an aggregate need parameter that is associated with each segment and assigning a portion of total available bandwidth to each service based at least in part on a ratio of the respective need parameter for a particular segment of the media streams for that service and the aggregate need parameter.

6. The method of claim 5 wherein a minimum bandwidth is associated with each of the services and further comprising allocating to each service the minimum bandwidth with which it is associated and allocating any additionally available bandwidth to each service based at least in part on the ratio of the respective need parameter for a particular segment of that service and the aggregate need parameter for the particular segment.

7. A statistical multiplexing streaming server (215), comprising:
a statistical multiplexer (520) for receiving, for each of a plurality of services, a plurality of media streams encoded at different bit rates, the plurality of media streams for each service containing common content to be received by one or more client devices, each of said media streams having associated therewith one or more need parameters reflecting a bit rate needed to transmit the respective media stream over a network at a given quality level, said statistical multiplexer including (i) a rate control processor for selecting one of the plurality of media streams for each service by allocating bandwidth to the media streams based on the need parameters associated therewith, and (ii) a multiplexer for multiplexing each of the selected media streams to form a multiplexed media stream; and
an adaptive streaming server (510) for receiving the multiplexed media stream from the statistical multiplexer and adaptively streaming the multiplexed media stream over a network to the client devices.

8. The statistical multiplexing streaming server of claim 7 wherein each of said media streams includes a plurality of segments each associated with a need parameter and wherein the rate control processor is configured to allocate bandwidth to each segment of the media streams based at least in part on the need parameter of each respective segment.

9. The statistical multiplexing streaming server of claim 8 wherein allocating bandwidth to each media stream includes allocating bandwidth to each segment of each media stream by summing the need parameters for corresponding segments of a media stream for each service to obtain an aggregate need parameter and assigning a portion of a total available bandwidth to each particular segment of the media streams for a service based at least in part on a ratio of the respective need parameter for a particular segment of a media stream for the service and the aggregate need parameter.

10. The statistical multiplexing streaming server of claim 8 wherein the need parameters for each media stream are incorporated into each respective media stream as metadata and further comprising at least one metadata extraction unit for extracting the metadata from the media streams and providing the extracted metadata to the rate control processor.

11. The statistical multiplexing streaming server of claim 10 wherein the media streams generated by the streaming server are encoded in accordance with an encoding protocol that supports inclusion of private metadata and wherein the need parameters are incorporated into the media streams as private metadata.

12. The statistical multiplexing streaming server of claim 11 wherein the encoding protocol is an MPEG protocol.

13. A headend (210) for delivering content over one or more networks, comprising:
a multi-bit rate video encoder (312) for providing programming content for a plurality of services and, for each of the services, generating a plurality of media streams encoded with the programming content at different bit rates;
a statistical multiplexer (520) for receiving the media streams from the multi-bit rate video encoder, wherein the statistical multiplexer, responsive to a measure of relative encoding complexity of the programming content in the media streams for each service, is configured to select one of the media streams for each service and multiplex the selected media streams to provide a multiplexed media stream, wherein the relative encoding complexity for each media stream for a service is determined by a measure of encoding complexity of a media stream for that service in comparison to a total measure of encoding complexity of a media stream for all the services; and
an adaptive streaming server (510) for streaming the multiplexed stream over one or more networks to client devices.

14. The headend of claim 13 wherein each media stream includes a plurality of segments having a defined duration, said measure of encoding complexity being a need parameter associated with each segment, said need parameters reflecting a bit rate needed to transmit the respective segments at a given quality level.

15. The headend of claim 14 wherein the relative encoding complexity is determined for each segment of the media streams.

16. The headend of claim 13 wherein the statistical multiplexer includes (i) a rate control processor for receiving the need parameters associated with each media stream and allocating bandwidth to the media streams based on the received need parameters, and (ii) a multiplexer for multiplexing each of the selected media streams.

17. The headend of claim 16 wherein the need parameters for each media stream are incorporated into each respective media stream as metadata and further comprising at least one metadata extraction unit for extracting the metadata from the media streams and providing the extracted metadata to the rate control processor.

18. The headend of claim 13 wherein the media streams generated by the multi-bit rate video encoder are encoded in accordance with an encoding protocol that supports inclusion of private metadata and wherein the need parameters are incorporated into the media streams as private metadata.

19. The headend of claim 18 wherein the encoding protocol supports private metadata at a transport stream level, a program elementary stream level and a video sequence level.

20. The headend of claim 19 wherein the encoding protocol conforms to an MPEG protocol and the private metadata is located in an adaptation field of transport packets in the media stream.

## Patentansprüche

1. Verfahren zum Zustellen von Streaming-Medieninhalt zu Kundengeräten über ein Netzwerk, umfassend:
Empfangen (610) einer Mehrzahl von Medien-Streams, die mit verschiedenen Bit-Raten codiert sind, für jeden einer Mehrzahl von Diensten, wobei die Mehrzahl von Medien-Streams für jeden Dienst einen gemeinsamen Inhalt enthalten, der von einem oder mehreren der Kundengeräte zu empfangen ist, wobei jeder der Medien-Streams eine Mehrzahl von Segmenten beinhaltet, die eine vorher festgelegte Dauer haben;
für jeden Dienst Erhalten eines Bedarfsparameters (620) für jedes Segment, das in den Medien-Streams für diesen Dienst enthalten ist, wobei jeder Bedarfsparameter eine Bit-Rate wiedergibt, die benötigt wird, um das entsprechende Segment der Medien-Streams für diesen Dienst über das Netzwerk mit einem gegebenen Qualitätsniveau zu übertragen;
Auswählen eines der Mehrzahl von Medien-Streams für jeden Dienst durch Zuweisen von Bandbreite zu den Medien-Streams, basierend auf zumindest zum Teil auf den Bedarfsparametern für jedes entsprechende Segment der Medien-Streams;
Multiplexen der ausgewählten Medien-Streams (630), um dadurch einen gemultiplexten Stream zu erstellen; und
adaptives Streamen des gemultiplexten Streams über das Netzwerk zu den Kundengeräten (640).

2. Verfahren nach Anspruch 1, wobei die Bedarfsparameter für jeden Dienst in zumindest einem der Medien-Streams für diesen Dienst integriert sind und das Erhalten der Bedarfsparameter ferner das Extrahieren des Bedarfsparameters für jedes Segment, das in den entsprechenden Medien-Stream enthalten ist, von zumindest einem der Medien-Streams für jeden Dienst umfasst.

3. Verfahren nach Anspruch 1, wobei die Bedarfsparameter auf einer tatsächlichen Komplexität des jeweiligen Segments der Medien-Streams, denen es zugeordnet ist, basieren.

4. Verfahren nach Anspruch 1, wobei die Bedarfsparameter auf einer abgeschätzten Komplexität des jeweiligen Segments der Medien-Streams, denen es zugeordnet ist, basieren.

5. Verfahren nach Anspruch 1, wobei das Zuweisen von Bandbreite zu den Medien-Streams Summieren der Bedarfsparameter für entsprechende Segmente der Medien-Streams für jeden Dienst, beinhaltet um einen Gesamt-Bedienparameter zu erhalten, der jedem Segment zugeordnet ist, und Zuweisen eines Bereichs gesamtverfügbarer Bandbreite zu jedem Dienst, basierend zumindest zum Teil auf einem Verhältnis des entsprechenden Bedarfsparameters für ein bestimmtes Segment der Medien-Streams für diesen Dienst und des Gesamt-Bedarfsparameters, aufweist.

6. Verfahren nach Anspruch 5, wobei mit jedem der Dienste eine minimale Bandbreite verbunden ist, und wobei das Verfahren ferner Zuteilen zu jedem Dienst der mit ihm verbundenen minimalen Bandbreite und Zuteilen jeder zusätzlich verfügbaren Bandbreite zu jedem Dienst basierend zumindest zum Teil auf dem Verhältnis des entsprechenden Bedarfsparameters für ein bestimmtes Segment dieses Dienstes und des Gesamt-Bedarfsparameters für das bestimmte Segment umfasst.

7. Statistisch multiplexender Streaming-Server (215) umfassend:
einen statistischen Multiplexer (520) zum Empfangen einer Mehrzahl von Medien-Streams, die mit verschiedenen Bit-Raten codiert sind, für jeden einer Mehrzahl von Diensten, wobei die Mehrzahl von Medien-Streams für jeden Dienst gemeinsamen Inhalt enthalten, der von einem oder mehreren Kundengeräten zu empfangen ist, wobei jede der Medien-Streams einen oder mehrere dem zugeordnete Bedarfsparameter hat, die eine Bit-Rate wiederspiegeln, die gebraucht wird, um den entsprechenden Medien-Stream über ein Netzwerk mit einem vorgegebenen Qualitätsniveau zu übertragen, wobei der statistische Multiplexer (i) einen Ratensteuerungsprozessor zum Auswählen eines der Mehrzahl von Medien-Streams für jeden Dienst durch Zuteilen von Bandbreite zu den Medien-Streams basierend auf den damit zugeordneten Bedarfsparametern beinhaltet und (ii) einen Multiplexer zum Multiplexen jedes der ausgewählten Medien-Streams zum Bilden eines gemultiplexten Medien-Streams beinhaltet;
einen adaptiven Streaming-Server (510) zum Empfangen des multiplexten Medien-Streams von den statistischen Multiplexer und adaptiven Streamen des gemultiplexten Medien-Streams über ein Netzwerk zu den Kundengeräten.

8. Statistischer multiplexer Streaming-Server nach Anspruch 7, wobei jeder der Medien-Streams eine Mehrzahl von Segmenten beinhaltet, die jeweils einem Bedarfsparameter zugeordnet sind, und wobei der Ratensteuerungsprozessor ausgebildet ist, jedem Segment der Medien-Streams basierend zumindest zum Teil auf dem Bedarfsparameter jedes entsprechenden Segments Bandbreite zuzuteilen.

9. Statistischer multiplexender Streaming-Server nach Anspruch 8, wobei das Zuteilen von Bandbreite zu jedem Medien-Stream ein Zuteilen von Bandbreite zu jedem Segment, jedes Medien-Streams durch Summieren der Bedarfsparameter für entsprechende Segmente eines Medien-Streams für jeden Dienst zum Erhalten eines Gesamt-Bedarfsparameters und Zuweisen eines Bereichs einer gesamtverfügbaren Bandbreite zu jedem bestimmten Segment der Medien-Streams für einen Dienst basierend zumindest zum Teil auf einem Verhältnis des entsprechenden Bedarfsparameters für ein bestimmtes Segment eines Medien-Streams für den Dienst und den Gesamt-Bedarfsparameters beinhaltet.

10. Statistisch multiplexender Streaming-Server nach Anspruch 8, wobei die Bedarfsparameter für jeden Medien-Stream in jedem entsprechenden Medien-Stream als Metadaten integriert sind und wobei der Streaming-Server ferner zumindest eine Metadatenentnahmeeinheit zum Entnehmen der Metadaten von den Medien-Streams und zum Bereitstellen der entnommenen Metadaten an den Ratensteuerungsprozessor.

11. Statistisch multiplexender Streaming-Server nach Anspruch 10, wobei die von dem Streaming-Server generierten Medien-Streams entsprechend eines Kodierungsprotokolls kodiert sind, das die Aufnahme von privaten Metadaten unterstützt, und wobei die Bedarfsparameter als private Metadaten in den Medien-Streams integriert sind.

12. Statistisch multiplexender Streaming-Server nach Anspruch 11, wobei das Kodierungsprotokoll ein MPEG-Protokoll ist.

13. Headend (210) zum Zustellen von Inhalt über ein oder mehrere Netzwerke, umfassend:
einen Mehrfach-Bit-Raten-Video-Encoder (312) zum Bereitstellen von Programmierinhalt für eine Mehrzahl von Diensten und zum Erzeugen einer Mehrzahl von Medien-Streams, die mit dem Programmierinhalt mit verschiedenen Bit-Raten kodiert sind, für jeden der Dienste;
einen statistischen Multiplexer (520) zum Empfangen der Medien-Streams von dem Mehrfach-Bit-Raten-Video-Encoder, wobei der statistische Multiplexer, der reaktiv auf ein Maß relativer Kodierkomplexität des Programmierinhalts in den Medien-Streams für jeden Dienst ist, ausgebildet ist, einen der Medien-Streams für jeden Service auszuwählen und die ausgewählten Medien-Streams zu multiplexen, um einen gemultiplexten Medien-Stream bereitzustellen, wobei die relative Kodierkomplexität für jeden Medien-Stream für einen Dienst durch ein Maß von Kodierkomplexität eines Medien-Streams für diesen Dienst im Vergleich zu einem Gesamtmaß von Kodierkomplexität eines Medien-Streams für alle Dienste bestimmt wird;
einen adaptiven Streaming-Server (510) zum Streamen des gemultiplexten Streams über ein oder mehrere Netzwerke zu Kundengeräten.

14. Headend nach Anspruch 13, wobei jeder Medien-Stream eine Mehrzahl von Segmenten beinhaltet, die eine festgelegte Dauer haben, wobei das Maß von Kodierkomplexität ein Bedarfsparameter ist, das jedem Segment zugeordnet ist, wobei die Bedarfsparameter eine Bit-Rate wiederspiegeln, die gebraucht wird, um die entsprechenden Segmente mit einem gegebenen Qualitätsniveau zu übertragen.

15. Headend nach Anspruch 14, wobei die relative Kodierkomplexität für jedes Segment der Medien-Streams bestimmt wird.

16. Headend nach Anspruch 13, wobei der statistische Multiplexer (i) einen Ratensteuerungsprozessor zum Empfangen der Bedarfsparameter, die jedem Medien-Stream zugeordnet sind, und zum Zuteilen von Bandbreite zu die Medien-Streams basierend auf den empfangenen Bedarfsparametern und (ii) einen Multiplexer zum Multiplexen jedes der ausgewählten Medien-Streams beinhaltet.

17. Headend nach Anspruch 16, wobei die Bedarfsparameter für jeden Medien-Stream in jedem entsprechendem Medien-Stream als Metadaten integriert sind und wobei das Headend ferner zumindest eine Metadatenentnahmeeinheit zum Entnehmen der Metadaten von den Medien-Streams und zum Bereitstellen der entnomennen Metadaten an denem Ratensteuerungsprozessor umfasst.

18. Headend nach Anspruch 13, wobei die Medien-Streams, die durch den Mehrfach-Bit-Raten-Videoencoder erzeugt werden, entsprechend eines Kodierprotokolls, das die Aufnahme von privaten Metadaten unterstützt, kodiert werden und wobei die Bedarfsparameter als Privatmetadaten in die Medien-Streams integriert sind.

19. Headend nach Anspruch 18, wobei das Kodierprotokoll private Metadaten auf einem Transport-Stream-Niveau, einem Programmgrundsatz-Stream-Niveau und einem Videosequenz-Niveau unterstützt.

20. Headend nach Anspruch 19, wobei das Kodierprotokoll einem MPEG-Protokoll entspricht und die privaten Metadaten in einem adaptiven Feld von Transportpaketen in den Medien-Stream angeordnet sind.

## Revendications

1. Un procédé de distribuer du contenu média en continu à des dispositifs clients à travers d'un réseau, comprenant :
recevoir (610), pour chacun parmi une pluralité de services, une pluralité de flux média codés avec des débits différents, la pluralité de flux média pour chaque service contenant du contenu commun à être reçu par un ou plusieurs des dispositifs clients, chacun desdits flux média incluant une pluralité de segments ayant une durée prescrite ;
obtenir pour chaque service un paramètre besoin (620) pour chaque segment contenu dans les flux média pour ce service, chaque paramètre besoin donnant un débit nécessaire pour transmettre le segment respectif des flux média via le réseau pour ce service à un niveau de qualité donné ;
sélectionner un parmi la pluralité de flux média pour chaque service en allouant de la bande passante aux flux média fondé au moins en partie sur les paramètres besoin pour chaque segment correspondant des flux média ;
multiplexer les flux média sélectionnés (630) pour ainsi former un flux multiplexé ;
et
diffuser le flux multiplexé en continu de façon adaptative aux dispositifs clients (640) via le réseau.

2. Le procédé selon la revendication 1 dans lequel les paramètres besoin pour chaque service sont incorporés dans au moins un des flux média pour ce service et obtenir les paramètres besoin comprend en outre d'au moins un des flux média pour chaque service extraire le paramètre besoin pour chaque segment contenu dans le flux média respectif.

3. Le procédé selon la revendication 1 dans lequel les paramètres besoin sont fondés sur une complexité réelle du segment respectif des flux média auxquels il est associé.

4. Le procédé selon la revendication 1 dans lequel les paramètres besoin sont fondés sur une estimation de la complexité du segment respectif du flux média avec lequel il est associé.

5. Le procédé selon la revendication 1 dans lequel allouer de la bande passante aux flux média comprend additionner les paramètres besoin pour des segments correspondants des flux média pour chaque service pour obtenir un paramètre besoin agrégé qui est associé avec chaque segment et allouer une portion de la bande passante totale disponible à chaque service fondé au moins en partie sur un rapport du paramètre besoin respectif pour un segment particulier des flux média pour ce service et le paramètre besoin agrégé.

6. Le procédé selon la revendication 5 dans lequel une bande passante minimale est associée avec chacun des services et comprenant en outre allouer à chaque service la bande passante minimale avec laquelle il est associé et allouer toute bande passante disponible de plus à chaque service fondé au moins en partie sur le rapport entre le paramètre besoin respectif pour un segment particulier de ce service et le paramètre besoin agrégé pour le segment particulier.

7. Un serveur de diffusion en continu à multiplexage statistique (215) comprenant :
un multiplexeur statistique (520) pour recevoir, pour chacun parmi une pluralité de services, une pluralité de flux média codés à des débits différents, la pluralité de flux média pour chaque service contenant du contenu commun à être reçu par un ou plusieurs dispositifs client, chacun desdits flux média ayant associé avec soi un ou plusieurs paramètres besoin donnant un débit nécessaire pour transmettre le flux média respectif via un réseau à un niveau de qualité donné, ledit multiplexeur statistique incluant (i) un processeur de contrôle de débit pour sélectionner un parmi la pluralité de flux média pour chaque service en allouant de la bande passante aux flux média fondé sur les paramètres besoin associés avec, et (ii) un multiplexeur pour multiplexer chacun des flux média sélectionnés pour former un flux média multiplexé ; et
un serveur de diffusion en continu adaptatif (510) pour recevoir le flux média multiplexé du multiplexeur statistique et diffuser le flux média multiplexé de façon adaptative à des dispositifs client via un réseau.

8. Le serveur de diffusion en continu à multiplexage statistique selon la revendication 7 dans lequel chacun desdits flux média inclut une pluralité de segments chacun associé avec un paramètre besoin et dans lequel le processeur de contrôle de débit est configuré pour allouer de la bande passante à chaque segment des flux média fondé au moins en partie sur le paramètre besoin de chaque segment respectif.

9. Le serveur de diffusion en continu à multiplexage statistique selon la revendication 8 dans lequel allouer de la bande passante à chaque flux média inclut allouer de la bande passante à chaque segment de chaque flux média en additionnant les paramètres besoin pour des segments correspondants d'un flux média pour chaque service pour obtenir un paramètre besoin agrégé et allouer une portion d'une bande passante totale disponible à chaque segment particulier des flux média pour un service fondé au moins en partie sur un rapport entre le paramètre besoin respectif pour un segment particulier d'un flux média pour le service et le paramètre besoin agrégé.

10. Le serveur de diffusion en continu à multiplexage statistique selon la revendication 8 dans lequel les paramètres besoin pour chaque flux média sont incorporés dans chaque flux média respectif en tant que métadonnées et comprenant en outre au moins une unité d'extraction de métadonnées pour extraire les métadonnées des flux média et fournir les métadonnées extraites au processeur de contrôle de débit.

11. Le serveur de diffusion en continu à multiplexage selon la revendication 10 dans lequel les flux média générés par le serveur de diffusion en continu sont codés conformément à un protocole de codage qui soutient l'inclusion de métadonnées privées et dans lequel les paramètres besoin sont incorporés dans les flux média en tant que métadonnées privées.

12. Le serveur de diffusion en continu à multiplexage statistique selon la revendication 11 dans lequel le protocole de codage est un protocole MPEG.

13. Une station de tête (210) pour livrer du contenu via un ou plusieurs réseaux, comprenant :
un codeur vidéo à débits multiples (312) pour fournir du contenu programme pour une pluralité de services et, pour chacun des services, générer une pluralité de flux média codés avec le contenu programme à des débits différents ;
un multiplexeur statistique (520) pour recevoir les flux média depuis le codeur vidéo à débits multiples, dans lequel le multiplexeur statistique, réactif à une mesure de complexité de codage relative du contenu programme dans les flux média pour chaque service, est configuré pour sélectionner un des flux média pour chaque service et multiplexer les flux média sélectionnés pour fournir un flux média multiplexé, dans lequel la complexité de codage relative pour chaque flux média pour un service est déterminé par une mesure de complexité de codage d'un flux média pour ce service en comparaison avec une mesure de complexité de codage totale d'un flux média pour tous les services ; et
un serveur de diffusion en continu adaptatif (510) pour diffuser en continu le flux multiplexé à des dispositifs clients via un ou plusieurs réseaux.

14. La station de tête selon la revendication 13 dans laquelle chaque flux média inclut une pluralité de segments ayant une durée définie, ladite mesure de complexité de codage étant un paramètre besoin associé avec chaque segment, lesdits paramètres besoin donnant un débit nécessaire pour transmettre les segments respectifs à un niveau de qualité donné.

15. La station de tête selon la revendication 14 dans laquelle la complexité de codage relative est déterminée pour chaque segment des flux média.

16. La station de tête selon la revendication 13 dans laquelle le multiplexeur statistique inclut (i) un processeur de contrôle de débit pour recevoir les paramètres besoin associés avec chaque flux média et allouer de la bande passante aux flux média fondé sur les paramètres besoin reçus, et (ii) un multiplexeur pour multiplexer chacun des flux média sélectionnés.

17. La station de tête selon la revendication 16 dans laquelle les paramètres besoin pour chaque flux média sont incorporés dans chaque flux média respectif en tant que métadonnées et comprenant en outre au moins une unité d'extraction de métadonnées pour extraire les métadonnées des flux média et fournir les métadonnées extraites au processeur de contrôle de débit.

18. La station de tête selon la revendication 13 dans laquelle les flux média générés par le codeur vidéo multi-débit sont codés conformément à un protocole de codage qui soutient l'inclusion de métadonnées privés et dans lequel les paramètres besoin sont incorporés dans les flux média en tant que métadonnées privées.

19. La station de tête selon la revendication 18 dans laquelle le protocole de codage soutient des métadonnées privées à un niveau transport de flux, un niveau flux élémentaire de programme et un niveau séquence vidéo.

20. La station de tête selon la revendication 19 dans laquelle le protocole de codage est conforme à un protocole MPEG et les métadonnées privées sont arrangées dans un champ d'adaptation des paquets de transport dans le flux média.
